# FASCICULE DE BREVET EUROPEEN

(11) **EP 2 416 955 B1**
(45) Date de publication et mention de la délivrance du brevet: **21.12.2016**
(21) Numéro de dépôt: 10715158.1
(22) Date de dépôt: 06.04.2010
(51) Int. Cl.: B32B 25/08

(54) **BANDAGE PNEUMATIQUE DONT LA CEINTURE EST RENFORCEE PAR UN FILM DE POLYMERE THERMOPLASTIQUE**
LUFTREIFEN, DESSEN GÜRTEL DURCH EINE THERMOPLASTISCHE POLYMERFOLIE VERSTÄRKT IST
PNEUMATIC TYRE, THE BELT OF WHICH IS REINFORCED BY A THERMOPLASTIC POLYMER FILM

(30) Priorité: 09.04.2009 FR 0952347
(43) Date de publication de la demande: 15.02.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LE CLERC, Christophe, F-63100 Clermont-Ferrand (FR)
(74) Mandataire: Ribière, Joel
(86) Numéro de dépôt international: PCT/EP2010/054486
(87) Numéro de publication internationale: WO 2010/115861

(56) Documents cités:
- EP-A- 0 706 878
- EP-A- 2 058 359
- US-A- 5 040 583
- US-A- 5 156 921
- US-A- 5 236 030

## Description

### DOMAINE DE L'INVENTION

La présente invention est relative aux bandages pneumatiques et au renforcement de leur armature de sommet ou ceinture.

Elle se rapporte plus particulièrement à l'utilisation de stratifiés multicouches dans le sommet de tels bandages pneumatiques, notamment comme couches de protection contre les agressions ou perforations.

### ETAT DE LA TECHNIQUE

De manière connue, un bandage pneumatique à armature de carcasse radiale comporte une bande de roulement, deux bourrelets inextensibles, deux flancs souples reliant les bourrelets à la bande de roulement et une armature de sommet rigide ou « ceinture » (*"belt"*) disposée circonférentiellement entre l'armature de carcasse et la bande de roulement.

La ceinture de pneumatique est généralement constituée de nappes en caoutchouc superposées pouvant comporter des fils de renforcement, métalliques ou textiles, disposés généralement parallèlement les uns aux autres à l'intérieur d'une nappe donnée.

En particulier, cette ceinture peut comporter une ou plusieurs nappes sommet dites "de protection", situées en général sous la bande de roulement et chargées de protéger le reste de la ceinture des agressions externes, déchirures ou autres perforations. C'est par exemple le cas général dans les ceintures des pneumatiques pour véhicules Poids-lourd ou Génie civil.

Ces nappes de protection doivent être suffisamment souples et déformables pour, d'une part, épouser au mieux la forme de l'obstacle sur lequel la ceinture appuie lors du roulage, et, d'autre part s'opposer à la pénétration de corps étrangers radialement à l'intérieur de celle-ci. La satisfaction de tels critères exige l'utilisation dans ces couches de protection de fils de renforcement sous forme de câbles présentant une haute élasticité ainsi qu'une énergie à la rupture élevée.

On utilise habituellement des câbles d'acier dits "à torons" ("*strand cords"*), qualifiés aussi de câbles haute élongation (câbles "HE"), qui sont assemblés par la technique connue de toronnage et constitués d'une pluralité de torons métalliques retordus ensemble en hélice, chaque toron comportant plusieurs fils d'acier également enroulés ensemble en hélice.

De tels câbles élastiques à torons ont été décrits dans un grand nombre brevets ou demandes de brevet, en particulier pour renforcer des nappes sommet de protection de pneumatiques pour véhicules industriels tels que Poids-lourd ou Génie civil (voir par exemple US 5843583, US 6475636, WO 2004/003287 (ou US 2005/0183808), WO 2004/033789 ou US 7089726, WO 2005/014925 ou US 2006/0179813).

Toutefois, ces nappes de protection sommet renforcées de câbles métalliques à torons présentent un certain nombre d'inconvénients.

Tout d'abord, ces câbles à torons sont relativement coûteux, ceci à double titre : d'une part, ils sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes.

D'autres inconvénients connus de ces câbles métalliques sont leur sensibilité à la corrosion, leur poids et leur encombrement (diamètre externe) relativement important.

### BREVE DESCRIPTION DE L'INVENTION

Poursuivant leurs recherches, les Demanderesses ont trouvé un stratifié multicouches léger et performant qui permet notamment de remplacer les nappes conventionnelles renforcées de câbles d'acier et donc de pallier les inconvénients précités.

Ainsi, selon un premier objet, la présente invention concerne un bandage pneumatique dont la ceinture est renforcée par un stratifié multicouches, caractérisé en ce que ledit stratifié comporte au moins un film de polymère thermoplastique étiré multiaxialement disposé entre et au contact de deux couches de composition de caoutchouc.

Ce stratifié multicouches possède une structure souple et hautement déformable qui s'est révélée présenter, de manière inattendue, une résistance élevée aux efforts de perforation, équivalente à celle des tissus conventionnels renforcés de câbles métalliques, malgré une épaisseur nettement inférieure.

Grâce notamment à son épaisseur réduite, ce stratifié présente en outre l'avantage d'être faiblement hystérétique comparativement à ces tissus conventionnels. Or, un objectif majeur des manufacturiers de bandages pneumatiques est justement d'abaisser l'hystérèse de leurs constituants pour réduire la résistance au roulement de ces bandages.

Les bandages pneumatiques de l'invention peuvent être destinés à des véhicules à moteur du type tourisme, 4x4, "SUV" (*Sport Utility Vehicles*), mais également à des véhicules deux-roues tels que motos ou vélos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention.

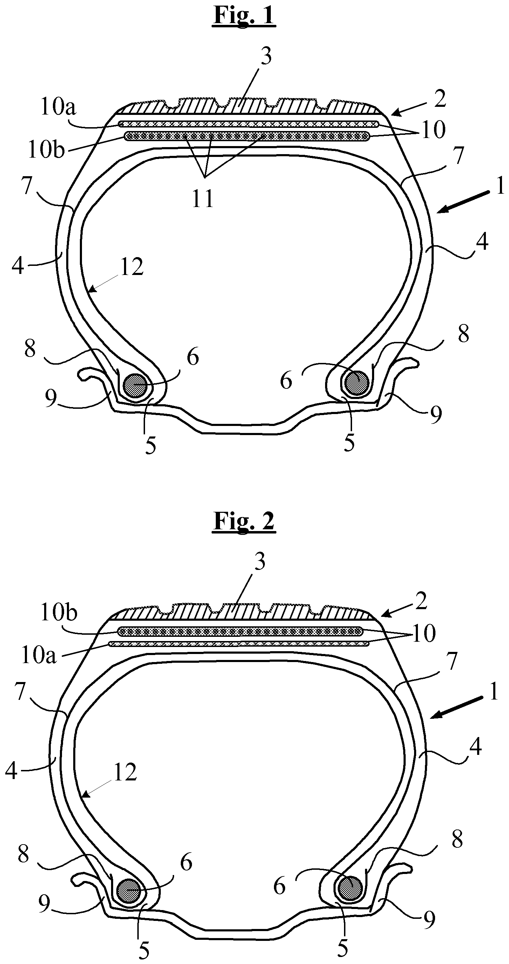

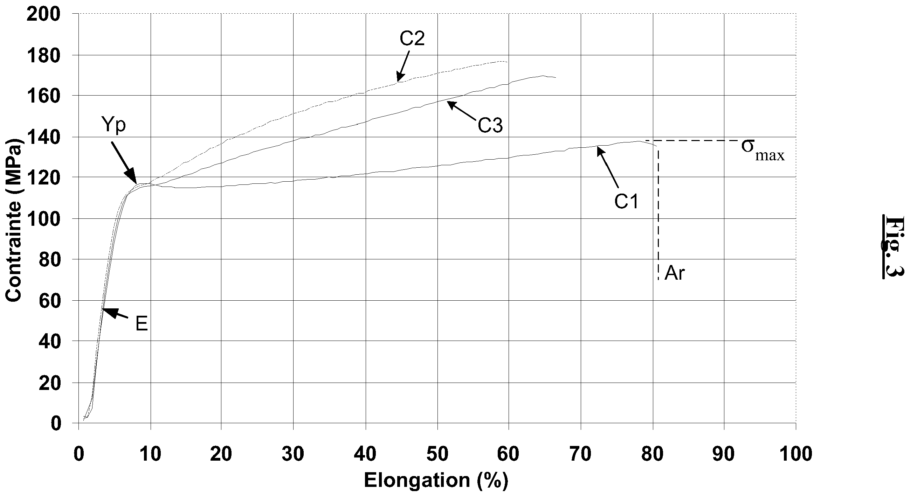

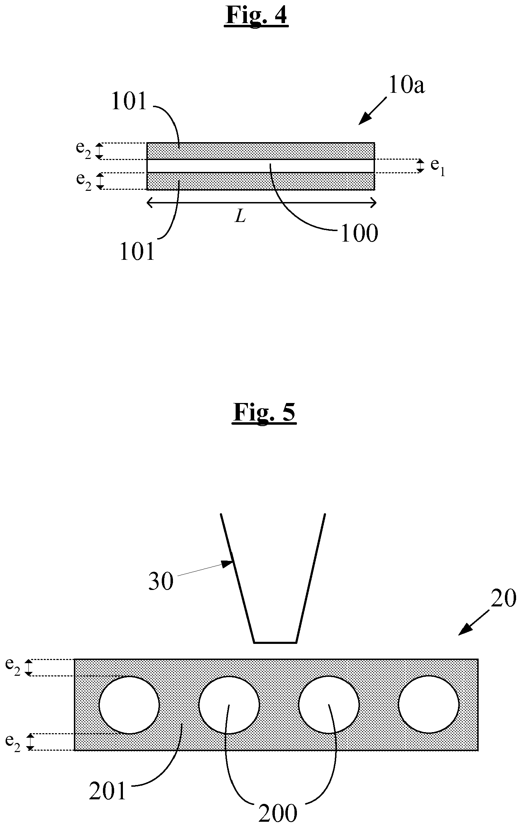

L'invention ainsi que ses avantages seront aisément compris à la lumière de la description détaillée et des exemples de réalisation qui suivent, ainsi que des figures 1 à 5 relatives à ces exemples qui schématisent (sauf indication contraire, sans respect d'une échelle spécifique) :
- en coupe radiale, deux exemples de bandage pneumatique conforme à l'invention, incorporant dans leur ceinture un stratifié multicouches conformément à l'invention (Fig. 1 et Fig. 2) ;
- des courbes contrainte-élongation enregistrées, selon trois directions de traction, sur un film de polymère thermoplastique (PET) orienté multiaxialement, utilisable dans le stratifié multicouches renforçant le bandage pneumatique de l'invention (Fig. 3) ;
- en coupe transversale, un stratifié multicouches utilisable conformément à l'invention (Fig. 4) ;
- en coupe transversale, une nappe conventionnelle de protection sommet comportant des câbles métalliques à haute élongation (Fig. 5).

### DEFINITIONS

Dans la présente demande, on entend par :
- "caoutchouc" ou "élastomère" (les deux termes étant considérés comme synonymes) : tout type d'élastomère, diénique ou non diénique par exemple thermoplastique ;
- "caoutchouc diénique" : tout élastomère (élastomère seul ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.
- "couche" : une bande ou tout autre élément tridimensionnel d'épaisseur relativement faible par rapport à ses autres dimensions, dont le rapport de l'épaisseur sur la plus grande des autres dimensions est inférieur à 0,5, de préférence inférieur à 0,1 ;
- "feuille" ou "film" toute couche fine, dont le rapport de l'épaisseur sur la plus petite des autres dimensions est inférieur à 0,1 ;
- "fil de renforcement" ("*reinforcing thread"*) : tout brin long et fin, tout filament élémentaire, toute fibre multifilamentaire ou tout assemblage de tels filaments ou fibres tels que des retors ou des câbles, de grande longueur relativement à sa section transversale, susceptible de renforcer les propriétés en extension d'une matrice de caoutchouc, ce fil pouvant être rectiligne comme non rectiligne, par exemple torsadé, ou ondulé ;
- "stratifié" ou "stratifié multicouches" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des % en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### DESCRIPTION DETAILLEE DE L'INVENTION

Le bandage pneumatique de l'invention a donc pour caractéristique essentielle que son armature de sommet ou ceinture est renforcée par un stratifié multicouches comportant au moins un film de polymère thermoplastique étiré multiaxialement disposé entre et au contact de deux couches de composition de caoutchouc, film et couches qui vont être décrits en détail ci-après.

Tout film de polymère thermoplastique étiré multiaxialement, c'est-à-dire étiré, orienté dans plus d'une direction, est utilisable. De tels films étirés multiaxialement sont bien connus, utilisés essentiellement à ce jour dans l'industrie de l'emballage (*"packaging"*), de l'alimentaire, dans le domaine électrique ou encore en tant que support de revêtements magnétiques.

Ils sont préparés selon diverses techniques d'étirage bien connues, toutes destinées à conférer au film des propriétés mécaniques élevées dans plusieurs directions principales et non dans une seule direction comme c'est le cas pour des fibres usuelles en polymère thermoplastique (par exemple PET ou "Nylon") qui sont de manière connue étirées monoaxialement lors de leur filage au fondu.

De telles techniques font appel à des étirages multiples dans plusieurs directions, étirages longitudinaux, transversaux, étirages planaires. A titre d'exemple, on peut notamment citer la technique de bi-étirage par soufflage. Les étirages peuvent être réalisés en une ou plusieurs fois, les étirages lorsqu'ils sont plusieurs pouvant être simultanés ou séquencés. Le ou les taux d'étirage appliqués sont fonction des propriétés mécaniques finales visées, généralement supérieurs à 2.

Des films de polymère thermoplastique étirés multiaxialement ainsi que leur procédés d'obtention ont été décrits dans de nombreux documents brevets, par exemple dans les documents FR 2539349 (ou GB 2134442), DE 3621205, EP 229346 (ou US 4876137), EP 279611 (ou US 4867937), EP 539302 (ou US 5409657) et WO 2005/011978 (ou US 2007/0031691).

De préférence, le film de polymère thermoplastique utilisé présente, quelle que soit la direction de traction considérée, un module en extension noté E qui est supérieur à 500 MPa (notamment entre 500 et 4000 MPa), plus préférentiellement supérieur à 1000 MPa (notamment entre 1000 et 4000 MPa), plus préférentiellement encore supérieur à 2000 MPa. Des valeurs de module E comprises entre 2000 et 4000 MPa, en particulier entre 3000 et 4000 MPa sont particulièrement souhaitables, notamment pour le renforcement de bandages pneumatiques.

Selon un autre mode préférentiel, quelle que soit la direction de traction considérée, la contrainte maximale en traction notée σₘₐₓ du film de polymère thermoplastique est de préférence supérieure à 80 MPa (notamment entre 800 et 200 MPa), plus préférentiellement supérieure à 100 MPa (notamment entre 100 et 200 MPa). Des valeurs de contrainte σₘₐₓ supérieures à 150 MPa, en particulier comprises entre 150 et 200 MPa, sont particulièrement souhaitables, notamment pour le renforcement de bandages pneumatiques.

Selon un autre mode préférentiel, quelle que soit la direction de traction considérée, le seuil de déformation plastique noté Yp (connu aussi sous le terme anglais de *"Yield point")* du film de polymère thermoplastique est situé au-delà de 3% d'allongement, notamment entre 3 et 15%. Des valeurs Yp au-delà de 4%, en particulier comprises entre 4 et 12%, sont particulièrement souhaitables, notamment pour le renforcement de bandages pneumatiques.

Selon un autre mode préférentiel, quelle que soit la direction de traction considérée, le film de polymère thermoplastique présente un allongement à la rupture noté Ar qui est supérieur à 40% (notamment entre 40 et 200%), plus préférentiellement supérieur à 50%. Des valeurs de Ar comprises entre 50 et 200% sont particulièrement souhaitables, notamment pour le renforcement de bandages pneumatiques.

Les propriétés mécaniques énoncées ci-dessus sont bien connues de l'homme du métier, déduites des courbes force-allongement, mesurées par exemple selon la norme ASTM D638-02 pour des bandes d'épaisseur supérieure à 1 mm, ou encore selon la norme ASTM D882-09 pour des feuilles fines ou films dont l'épaisseur est au plus égale à 1 mm ; les valeurs de module E et de contrainte σₘₐₓ ci-dessus, exprimées en MPa, sont calculées par rapport à la section initiale de l'éprouvette tractionnée.

Le film de polymère thermoplastique utilisé est de préférence du type stabilisé thermiquement, c'est-à-dire qu'il a subi, après étirage, un ou plusieurs traitements thermiques destinés de manière connue à limiter sa contraction (ou retrait) thermique à haute température ; de tels traitements thermiques peuvent consister notamment en des recuits, des trempes ou des combinaisons de tels recuits ou trempes.

Ainsi, et de préférence, le film de polymère thermoplastique utilisé présente, après 30 min à 150°C, une contraction relative de sa longueur qui est inférieure à 5%, de préférence inférieure à 3% (mesurée sauf précisions différentes selon ASTM D1204-08).

La température de fusion du polymère thermoplastique utilisé est préférentiellement choisie supérieure à 100°C, plus préférentiellement supérieure à 150°C, en particulier supérieure à 200°C notamment dans le cas de renforcement de bandages pneumatiques.

Le polymère thermoplastique est choisi préférentiellement dans le groupe constitué par les polyamides, les polyesters et les polyimides, plus particulièrement dans le groupe constitué par les polyamides et les polyesters. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Le polymère thermoplastique est préférentiellement un polyester, plus préférentiellement un PET ou PEN.

Des exemples de films de polymère thermoplastique PET étirés multiaxialement, convenant à l'invention, sont par exemple les films de PET bi-étirés commercialisés sous les dénominations "Mylar" et "Melinex" (société DuPont Teijin Films), ou encore "Hostaphan" (société Mitsubishi Polyester Film).

Dans le stratifié multicouches du bandage pneumatique de l'invention, l'épaisseur e₁ du film de polymère thermoplastique est de préférence comprise entre 0,05 et 1 mm, plus préférentiellement entre 0,1 et 0,7 mm. Par exemple, des épaisseurs de film de 0,20 à 0,60 mm se sont révélées tout à fait convenir pour la plupart des utilisations.

Le film de polymère thermoplastique peut comporter des additifs ajoutés au polymère, notamment au moment de la mise en forme de ce dernier, ces additifs pouvant être par exemple des agents de protection contre le vieillissement, des plastifiants, des charges telles que silice, argiles, talc, kaolin ou encore fibres courtes ; des charges peuvent par exemple être utilisées pour rendre la surface du film rugueuse et contribuer ainsi à améliorer sa prise de colle et/ou son adhésion aux couches de caoutchouc avec lesquelles il est destiné à être au contact.

Chaque couche de composition de caoutchouc, ou ci-après "couche de caoutchouc", constitutive du stratifié multicouches du bandage pneumatique de l'invention est à base d'au moins un élastomère.

De préférence, le caoutchouc est un caoutchouc diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silice précipitées ou pyrogénées présentant une surface BET inférieure à 450 m²/g, de préférence de 30 à 400 m²/g.

L'homme de l'art saura, à la lumière de la présente description, ajuster la formulation de la composition de caoutchouc afin d'atteindre les niveaux de propriétés (notamment module d'élasticité) souhaités, et adapter la formulation à l'application spécifique envisagée.

De préférence, la composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées convenir particulièrement pour le renforcement des ceintures de bandages de pneumatiques. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans le stratifié multicouches du bandage pneumatique de l'invention, l'épaisseur e₂ de chaque couche de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenirdans la plupart des cas.

De préférence, le stratifié multicouches du pneumatique de l'invention présente une largeur et une longueur qui sont respectivement supérieures à 2,5 mm et à 10 cm, plus préférentiellement respectivement supérieures à 5 mm et à 20 cm.

Le film de polymère thermoplastique peut être utilisé tel quel, c'est-à-dire tel que disponible commercialement, ou bien re-découpé à façon sous forme de bandes ou bandelettes étroites dont la largeur peut varier dans une très large mesure selon les applications visées.

Selon un mode de réalisation préférentiel, dans le stratifié multicouches du bandage pneumatique de l'invention, le film de polymère thermoplastique est pourvu d'une couche adhésive au regard de chaque couche de composition de caoutchouc avec laquelle il est au contact.

Pour faire adhérer le caoutchouc au film de polymère thermoplastique, on pourra utiliser tout système adhésif approprié, par exemple une simple colle textile du type "RFL" (résorcinolformaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four (par exemple pendant 30 s à 180°C) et enfin traitement thermique (par exemple pendant 30 s à 230°C).

Avant l'encollage ci-dessus, il peut être avantageux d'activer la surface du film, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou composé isocyanate.

La surface du film de polymère thermoplastique étant en règle générale particulièrement lisse, il peut être également avantageux d'ajouter un épaississant à la colle utilisée, afin d'améliorer la prise totale de colle du film lors de son encollage.

L'homme du métier comprendra aisément que, dans le stratifié multicouches, la connexion entre le film de polymère thermoplastique et chaque couche de caoutchouc avec laquelle il est au contact est assurée définitivement lors de la cuisson (réticulation) finale du bandage pneumatique de l'invention.

### EXEMPLES DE REALISATION DE L'INVENTION

Le stratifié multicouches précédemment décrit est utilisable comme élément de renforcement, en particulier comme élément de protection contre la perforation, dans tout type de bandage pneumatique, notamment dans des bandages pneumatiques destinés à tous types de véhicules, en particulier à des véhicules tourisme ou des véhicules industriels tels que Poids-lourd, Génie civil, , avions, autres véhicules de transport ou de manutention.

A titre d'exemple, la figure 1 annexée représente de manière très schématique, sans respect d'une échelle spécifique, une coupe radiale d'un bandage pneumatique conforme à l'invention.

Ce bandage pneumatique 1 comporte un sommet 2 surmonté d'une bande de roulement 3, deux flancs 4 et deux bourrelets 5, chacun de ces bourrelets 5 étant renforcé avec une tringle 6. Une armature de carcasse 7 est enroulée autour des deux tringles 6 dans chaque bourrelet 4, le retournement 8 de cette armature 7 étant par exemple disposé vers l'extérieur du pneumatique 1 qui est ici représenté monté sur sa jante 9. Le sommet 2 est ici renforcé par une armature de sommet ou ceinture 10 constituée d'au moins deux structures renforçantes distinctes (10a, 10b).

Ce bandage pneumatique 1 a pour caractéristique nouvelle et essentielle que sa ceinture 10 (ou son sommet 2, ce qui revient au même) comporte au moins un stratifié multicouches 10a, disposé radialement entre la bande de roulement 3 et l'armature de carcasse 7, ledit stratifié multicouches 10a étant constitué lui-même du film de polymère thermoplastique étiré multiaxialement disposé entre deux couches de caoutchouc avec lesquelles il est au contact.

Dans ce bandage 1 illustré à la figure 1, on comprendra que la bande de roulement 3, le stratifié multicouches 10a, la structure de renforcement sommet 10b et l'armature de carcasse 7 peuvent être ou non au contact les uns des autres, même si ces parties ont été volontairement séparées sur la figure 1, schématique, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Le stratifié multicouches 10a tel qu'illustré plus en détail à la figure 4 est ici constitué d'un film 100 de PET bi-étiré, d'épaisseur e₁ par exemple égale à environ 0,35 mm, disposé "en sandwich" entre deux couches 101 de composition de caoutchouc d'épaisseur e₂ par exemple égale à environ 0,4 mm, le stratifié ayant donc une épaisseur totale (e₁+2e₂) par exemple d'environ 1,15 mm. La composition de caoutchouc ici utilisée est une composition conventionnelle pour le calandrage de nappes métalliques de ceinture de bandage pneumatique, typiquement à base de caoutchouc naturel, de noir de carbone, d'un système de vulcanisation et des additifs usuels. L'adhésion entre le film de PET et chaque couche de caoutchouc est assurée par une colle du type RFL qui a été déposée de manière connue, comme indiqué précédemment.

Sur la figure 1 illustrant un premier mode de réalisation préférentiel de l'invention, on voit que le stratifié multicouches 10a constitue, au sein de la ceinture 10, une structure ou écran de protection du sommet, située sous la bande de roulement et chargée de protéger le reste de la ceinture, en l'occurrence dans cet exemple la structure de renforcement sommet 10b, contre des agressions externes, déchirures ou autres perforations pouvant intervenir lors du roulage du bandage pneumatique.

Avantageusement, le stratifié multicouches a également pour fonction de constituer un écran, une barrière à l'eau et à l'oxygène, autant d'éléments corrosifs vis-à-vis de câbles métalliques présents dans le reste du bandage pneumatique de l'invention, notamment dans la ceinture elle-même ou dans son armature de carcasse.

La figure 2 annexée illustre un autre mode possible de réalisation de l'invention dans lequel le stratifié multicouches 10a constitue, au sein de cette même ceinture 10, une structure ou écran de protection du sommet située cette fois sous la structure de renforcement sommet 10b et chargée de protéger le reste du bandage pneumatique, en l'occurrence dans cet exemple son armature de carcasse 7.

Selon un autre mode de réalisation possible de l'invention, deux structures de protection (stratifiés multicouches) 10a du sommet pourraient être également disposées de part et d'autre, radialement, de la structure de renforcement sommet 10b.

Dans les représentations ci-dessus des figures 1 et 2, l'armature de carcasse 7 est de manière connue en soi constituée d'au moins une nappe de caoutchouc renforcée par des fils de renforcement dits "radiaux", par exemple textiles ou métalliques, c'est-à-dire que ces fils de renforcement sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 10).

Ces fils de renforcement radiaux sont par exemple en acier, en polyester, nylon, aramide, cellulose, polycétone, ou encore du type hybrides ou composites c'est-à-dire constitués d'un mélange des matières précitées comme par exemple des câbles hybrides aramide-nylon.

La structure de renforcement sommet 10b de la ceinture 10 est par exemple constituée, de manière connue en soi, par une nappe de caoutchouc renforcée par des fils de renforcement 11 dits "circonférentiels", par exemple textiles ou métalliques, c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels 11 ont pour fonction première, on le rappelle, de résister à la centrifugation du sommet à haute vitesse.

Comme exemples de fils de renforcement circonférentiels 11, sont par exemple utilisables des câbles en acier au carbone ou en acier inoxydable, des câbles textiles constitués de fibres retordues entre elles, en particulier et préférentiellement des câbles connus pour leur stabilité dimensionnelle relativement à la température et/ou l'humidité. Les fibres textiles de ces câbles sont par exemple choisies dans le groupe constitué par les fibres d'alcool polyvinylique, de polyamide aromatique (ou "aramide"), de polyamide aliphatique (ou "Nylon"), de polyester (e.g. PET ou PEN), de polyester aromatique, de cellulose (par exemple rayonne, viscose), de polyphénylène benzobisoxazole, de polycétone, les fibres de verre, de carbone, les fibres céramiques. A titre particulièrement préférentiel, on citera notamment des fils de renforcement en acier au carbone, aramide, polyester, nylon, cellulose, polycétone, ainsi que des fils de renforcement hybrides constitués de ces différents matériaux tels que des câbles aramide/nylon.

Les fils de renforcement radiaux ou circonférentiels ci-dessus peuvent prendre toute forme connue, il peut d'agir par exemple de mono filaments élémentaires de diamètre important (par exemple et de préférence égal ou supérieur à 50 µm), de fibres multifilamentaires (constituées d'une pluralité de filaments élémentaires de faible diamètre, typiquement inférieur à 30 µm), de retors textiles formés de plusieurs fibres retordues ensemble, de câbles textiles ou métalliques formés de plusieurs fibres ou mono filaments câblés ou retordus ensemble.

La structure de renforcement 10b de la ceinture 10 pourrait être également constituée, de manière bien connue de l'homme du métier, d'au moins deux nappes dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée.

La figure 3 reproduit les courbes contrainte-élongation enregistrées sur le film de PET bi-étiré ("Mylar A" de la société DuPont Teijin Films, d'épaisseur 0,35 mm) qui est utilisé dans les exemples de bandages pneumatiques conformes à l'invention précédemment décrits.

Les courbes notées C1, C2 et C3 correspondent à une traction conduite, respectivement, selon l'orientation principale du film correspondant à la direction d'extrusion (connue aussi sous le nom de direction "MD" pour *"Machine Direction"*), selon une orientation normale à la direction MD (connue sous le nom de direction "TD" pour *"Transversale Direction*"), et enfin selon une direction oblique (angle de 45°) par rapport aux deux directions précédentes (MD et TD). De ces courbes de traction peuvent être déduites, de manière bien connue de l'homme du métier, comme indiqué sur la figure 3, les propriétés mécaniques telles que module en extension (E), contrainte maximale en traction (σₘₐₓ), seuil de déformation plastique Yp (ou "*Yield point*") et allongement à la rupture (Ar).

Ces courbes de traction ont été enregistrées et les propriétés mécaniques mesurées sauf indication différente selon la norme ASTM D882-09, sur des éprouvettes de films sous forme d'haltères de 4 mm de large et 30 mm de long (partie utile tractionnée), et d'épaisseur e₁ égale à celle du film de polymère thermoplastique testé, tractionnées à une vitesse de 200 mm/min.

A la lecture de la figure 3, on constate notamment que le film de polymère thermoplastique étiré multiaxialement a, ce qui correspond à un autre mode de réalisation préférentiel de l'invention, quelle que soit la direction de traction considérée, les propriétés mécaniques suivantes (déduites des courbes contrainte-élongation de la figure 3) :
- un module en extension E supérieur à 500 MPa ;
- une contrainte maximale en traction σₘₐₓ supérieure à 100 MPa ;
- un seuil de déformation plastique Yp compris entre 5 et 10% ;
- un allongement à la rupture noté Ar supérieur à 50%.

La qualité du renforcement apporté par le stratifié multicouches à la ceinture du bandage pneumatique de l'invention peut être appréciée par un test dit de perforation consistant à mesurer la résistance à la perforation par un indenteur donné. Le principe de ce test est bien connu, décrit par exemple dans la norme ASTM F1306-90.

Lors de tests de perforation comparatifs, on a testé :
- d'une part, un stratifié multicouches (10a) comportant le film bi-étiré (100) décrit ci-dessus, d'épaisseur e₁ simplement disposé entre deux couches de caoutchouc (101) d'épaisseur e₂, comme illustré à la figure 4 ;
- d'autre part, pour comparaison, un tissu métallique conventionnel comportant une série de câbles multitorons en acier (200) disposés parallèlement entre eux, dans un plan, selon un pas de pose d'environ 2,5 mm, la dite série de câbles étant enrobée dans du caoutchouc (201), comme illustré à la figure 5 ; l'épaisseur de caoutchouc au dos des câbles est ici égale à e₂ soit environ 0,4 mm.

Ces câbles multitorons (200) de construction dite "6 x 0,35" ou "3 x 2 x 0,35" sont des câbles constitués chacun de 3 torons (torons non représentés à la figure 5, pour simplification) de 2 fils de diamètre 0,35 mm, assemblés entre eux par câblage, pour former des câbles métalliques élastiques (i.e., à haute élongation ou HE) bien connus pour renforcer des nappes sommet de protection de bandages pneumatiques pour véhicules industriels tels que décrits en introduction du présent mémoire (voir par exemple demande WO 2004/033789 précitée). Le diamètre total (ou diamètre d'encombrement) de ces câbles est de 1,4 mm environ, si bien que le tissu métallique final a une épaisseur totale d'environ 2,2 mm.

Les figures 4 et 5 ont été représentées sensiblement à la même échelle (échelle 1) pour illustrer la différence notable d'épaisseur existant entre le stratifié multicouches utilisé conformément à l'invention (10a) et le tissu métallique conventionnel (20).

Dans le stratifié multicouches du bandage pneumatique de l'invention, la largeur "*L*" du film (100) est de préférence identique à la largeur des deux couches de caoutchouc (101) entre lesquelles il est disposé, comme schématisé à la figure 4. Mais l'invention s'applique bien entendu aux cas où cette largeur *L* est différente, inférieure ou supérieure ; par exemple, le film de polymère thermoplastique, dans ce stratifié multicouches, pourrait être constitué d'une pluralité de bandes ou bandelettes plus étroites, par exemple juxtaposées et orientées selon une direction principale identique ou différente de celle des deux couches de caoutchouc.

L'indenteur métallique utilisé (illustré à la figure 5 sous la référence 30) était de forme cylindrique (diamètre 4,5 ± 0,05 mm), conique à son extrémité (angle de 30°± 2) et tronqué à un diamètre de 1 mm. L'échantillon de composite testé (stratifié multicouches selon l'invention ou tissu métallique témoin) a été fixé sur un support métallique d'épaisseur 18 mm qui était percé, à l'aplomb de l'indenteur, d'un trou de diamètre 12,7 mm pour permettre le passage libre de l'indenteur à travers l'échantillon perforé et sa plaque support.

Puis, pour caractériser la résistance à la perforation, on a enregistré la courbe force-déplacement de l'indenteur ci-dessus (équipé de capteurs reliés à la machine de traction), traversant l'échantillon à une vitesse de 10 cm/min.

Le tableau 1 ci-dessous donne le détail des mesures enregistrées, la base 100 étant retenue pour le composite témoin : le module de fléchissement représente la pente initiale de la courbe force-déplacement ; la force à la perforation est la force maximale enregistrée avant perforation de l'échantillon par la pointe de l'indenteur ; l'allongement à la perforation est l'allongement relatif enregistré au moment de la perforation.

**Tableau 1**

| Composite testé : | épaisseur (mm) | Module de fléchissement | Force à la perforation | Allongement à la perforation |
|---|---|---|---|---|
| Témoin | 2,20 | 100 | 100 | 100 |
| Invention | 1,15 | 93 | 92 | 103 |

A la lecture du tableau 1, on constate que le stratifié multicouches du bandage pneumatique de l'invention présente de manière surprenante, malgré une épaisseur pratiquement réduite de moitié par rapport à la solution témoin et l'absence de fils de renforcement, une résistance à la perforation quasiment équivalente à celle du tissu métallique habituel.

D'autres essais de roulage de bandages pneumatiques pour véhicules tourisme dont la ceinture comportait un stratifié multicouches conformément à l'invention, dont le film de polymère thermoplastique étiré multiaxialement (PET bi-étiré) se présentait sous forme de bandelettes de largeur 30 mm environ, juxtaposées et inclinées de 40° par rapport au plan circonférentiel médian. Cette ceinture était simplement constituée du stratifié multicouches ci-dessus (10a) et d'une structure de renforcement (10b) (fils de renforcement circonférentiels 11 en aramide), telle que schématisée à la figure 1. Ces essais ont été conduits afin de mesurer la poussée de dérive de ces bandages pneumatiques ; on rappelle qu'une poussée de dérive (en anglais *"drift thrust"* ou *"cornering*") élevée offre aux bandages pneumatiques un très bon niveau de comportement routier ("*handling*") sur véhicule automobile.

Pour les besoins de ces essais, chaque bandage pneumatique testé est monté sur une roue de dimension adaptée et gonflé à 2,2 bars. On le fait rouler à une vitesse constante de 80 km/h sur une machine automatique appropriée (machine type "sol-plan" commercialisée par la société MTS). On fait varier la charge notée "Z", sous un angle de dérive de 1 degré, et on mesure de manière connue la rigidité ou poussée de dérive notée "D" (corrigée de la poussée à dérive nulle), en enregistrant à l'aide de capteurs l'effort transversal sur la roue en fonction de cette charge Z ; la poussée de dérive est la pente à l'origine de la courbe D(Z).

On a constaté, de manière surprenante, que ces bandages pneumatiques de l'invention, malgré leur structure de ceinture particulièrement simple et allégée, en particulier dépourvue des deux nappes de travail conventionnelles précédemment décrites, développaient une poussée de dérive équivalente à celle observée sur une ceinture conventionnelle comportant les deux nappes de travail et la structure 10b de fils de renforcement circonférentiels (mais dépourvue du stratifié multicouches).

En conséquence, les avantages du stratifié multicouches du bandage pneumatique de l'invention sont nombreux (notamment faible épaisseur, faible densité, faible coût, insensibilité à la corrosion) comparativement à des tissus métalliques conventionnels, et les résultats obtenus grâce à l'invention laissent présager un très grand nombre d'applications possibles en tant qu'élément de renforcement de la ceinture de bandages pneumatiques, disposé entre la bande de roulement et l'armature de carcasse de tels bandages.

Le stratifié multicouches précédemment décrit est avantageusement utilisable non seulement dans des bandages pneumatiques pour véhicules de tourisme, mais encore dans tous types de bandages pneumatiques pour véhicules industriels, en particulier pour véhicules industriels destinés à affronter des conditions de roulage sévères ou agressives, tels que par exemple des engins de transport routier, des véhicules hors-la-route tels qu'engins agricoles ou de Génie civil, pour avions, autres véhicules de transport ou de manutention.

## Revendications

1. Bandage pneumatique dont la ceinture est renforcée par un stratifié multicouches, **caractérisé en ce que** ledit stratifié comporte au moins un film de polymère thermoplastique étiré multiaxialement disposé entre et au contact de deux couches de composition de caoutchouc.

2. Bandage selon la revendication 1, dans lequel le caoutchouc est un caoutchouc diénique.

3. Bandage selon la revendication 2, dans lequel le caoutchouc diénique est choisi dans le groupe constitué par les polybutadiènes, le caoutchouc naturel, les polyisoprènes de synthèse, les différents copolymères de butadiène, les différents copolymères d'isoprène, et les mélanges de ces élastomères.

4. Bandage selon la revendication 3, dans lequel chaque couche de composition de caoutchouc comporte 50 à 100 pce de caoutchouc naturel.

5. Bandage selon l'une quelconque des revendications 1 à 4, dans lequel le film de polymère thermoplastique présente, quelle que soit la direction de traction considérée, un module en extension noté E qui est supérieur à 500 MPa, de préférence supérieur à 1000 MPa.

6. Bandage selon l'une quelconque des revendications 1 à 5, dans lequel le film de polymère thermoplastique présente, quelle que soit la direction de traction considérée, un contrainte maximale en traction notée σₘₐₓ qui est supérieure à 80 MPa, de préférence supérieure à 100 MPa.

7. Bandage selon l'une quelconque des revendications 1 à 6, dans lequel le film de polymère thermoplastique présente, quelle que soit la direction de traction considérée, un allongement à la rupture noté Ar qui est supérieur à 40%.

8. Bandage selon l'une quelconque des revendications 1 à 7, dans lequel le film de polymère thermoplastique est stabilisé thermiquement.

9. Bandage selon l'une quelconque des revendications 1 à 8, dans lequel le film de polymère thermoplastique présente, après 30 min à 150°C, une contraction relative de longueur qui est inférieure à 5%.

10. Bandage selon l'une quelconque des revendications 1 à 9, dans lequel le polymère thermoplastique est un polyester.

11. Bandage selon la revendication 10, dans lequel le polyester est un polyéthylène téréphthalate ou un polyéthylène naphthalate.

12. Bandage selon l'une quelconque des revendications 1 à 11, dans lequel l'épaisseur du film de polymère thermoplastique est comprise entre 0,05 et 1 mm.

13. Bandage selon l'une quelconque des revendications 1 à 12, dans lequel l'épaisseur de chaque couche de composition de caoutchouc est comprise entre 0,05 et 2 mm.

14. Bandage selon l'une quelconque des revendications 1 à 13, dans lequel la largeur et la longueur du stratifié multicouches sont respectivement supérieures à 2,5 mm et 10 cm.

15. Bandage selon l'une quelconque des revendications 1 à 14, dans lequel le film de polymère thermoplastique est pourvu d'une couche adhésive au regard de chaque couche de composition de caoutchouc.

## Patentansprüche

1. Luftreifen, dessen Gürtel durch ein Mehrschichtlaminat verstärkt wird, **dadurch gekennzeichnet, dass** das Laminat mindestens eine multiaxial gestreckte thermoplastische Polymerfolie aufweist, die zwischen und in Kontakt mit zwei Schichten einer Kautschukzusammensetzung angeordnet ist.

2. Reifen nach Anspruch 1, wobei der Kautschuk ein Dienkautschuk ist.

3. Reifen nach Anspruch 2, wobei der Dienkautschuk aua der Gruppe ausgewählt wird, die aus den Polybutadienen, dem natürlichen Kautschuk, den synthetischen Polyisoprenen, den verschiedenen Butadien-Copolymeren, den verschiedenen Isopren-Copolymeren und den Mischungen dieser Elastomere besteht.

4. Reifen nach Anspruch 3, wobei jede Kautschukzusammensetzungsschicht 50 bis 100 pce natürlichen Kautschuk enthält.

5. Reifen nach einem der Ansprüche 1 bis 4, wobei die thermoplastische Polymerfolie unabhängig von der betrachteten Zugrichtung einen mit E bezeichneten Dehnungsmodul aufweist, der höher ist als 500 MPa, vorzugsweise höher als 1000 MPa.

6. Reifen nach einem der Ansprüche 1 bis 5, wobei die thermoplastische Polymerfolie unabhängig von der betrachteten Zugrichtung eine mit σₘₐₓ bezeichnete maximale Zugspannung aufweist, die höher ist als 80 MPa, vorzugsweise höher als 100 MPa.

7. Reifen nach einem der Ansprüche 1 bis 6, wobei die thermoplastische Polymerfolie unabhängig von der betrachteten Zugrichtung eine mit Ar bezeichnete Bruchdehnung aufweist, die höher ist als 40%.

8. Reifen nach einem der Ansprüche 1 bis 7, wobei die thermoplastische Polymerfolie thermisch stabilisiert wird.

9. Reifen nach einem der Ansprüche 1 bis 8, wobei die thermoplastische Polymerfolie nach 30 Minuten bei 150°C eine relative Längenkontraktion aufweist, die geringer ist als 5%.

10. Reifen nach einem der Ansprüche 1 bis 9, wobei das thermoplastische Polymer ein Polyester ist.

11. Reifen nach Anspruch 10, wobei der Polyester ein Polyethylenterephthalat oder ein Polyethylennaphthalat ist.

12. Reifen nach einem der Ansprüche 1 bis 11, wobei die Dicke der thermoplastischen Polymerfolie zwischen 0,05 und 1 mm liegt.

13. Reifen nach einem der Ansprüche 1 bis 12, wobei die Dicke jeder Kautschukzusammensetzungsschicht zwischen 0,05 und 2 mm liegt.

14. Reifen nach einem der Ansprüche 1 bis 13, wobei die Breite und die Länge des Mehrschichtlaminats größer als 2,5 mm bzw. 10 cm sind.

15. Reifen nach einem der Ansprüche 1 bis 14, wobei die thermoplastische Polymerfolie mit einer Klebstoffschicht gegenüber jeder Kautschukzusammensetzungsschicht versehen ist.

## Claims

1. Pneumatic tyre, the belt of which is reinforced by a multilayer laminate, **characterized in that** said laminate comprises at least one multiaxially drawn thermoplastic polymer film placed between and in contact with two layers of rubber composition.

2. Tyre according to Claim 1, in which the rubber is a diene rubber.

3. Tyre according to Claim 2, in which the diene rubber is chosen from the group consisting of polybutadienes, natural rubber, synthetic polyisoprenes, the various butadiene copolymers, the various isoprene copolymers and mixtures of these elastomers.

4. Tyre according to Claim 3, in which each layer of rubber composition comprises 50 to 100 phr of natural rubber.

5. Tyre according to any one of Claims 1 to 4, in which the thermoplastic polymer film has, irrespective of the tensile direction considered, a tensile modulus, denoted by E, which is greater than 500 MPa, preferably greater than 1000 MPa.

6. Tyre according to any one of Claims 1 to 5, in which the thermoplastic polymer film has, irrespective of the tensile direction considered, a maximum tensile stress, denoted by σₘₐₓ, which is greater than 80 MPa, preferably greater than 100 MPa.

7. Tyre according to any one of Claims 1 to 6, in which the thermoplastic polymer film has, irrespective of the tensile direction considered, an elongation at break, denoted by Ar, which is greater than 40%.

8. Tyre according to any one of Claims 1 to 7, in which the thermoplastic polymer film is thermally stabilized.

9. Tyre according to any one of Claims 1 to 8, in which the thermoplastic polymer film has, after 30 min at 150°C, a relative shrinkage in length which is less than 5%.

10. Tyre according to any one of Claims 1 to 9, in which the thermoplastic polymer is a polyester.

11. Tyre according to Claim 10, in which the polyester is a polyethylene terephthalate or a polyethylene naphthalate.

12. Tyre according to any one of Claims 1 to 11, in which the thickness of the thermoplastic polymer film is between 0.05 and 1 mm.

13. Tyre according to any one of Claims 1 to 12, in which the thickness of each layer of rubber composition is between 0.05 and 2 mm.

14. Tyre according to any one of Claims 1 to 13, in which the width and the length of the multilayer laminate are respectively greater than 2.5 mm and 10 cm.

15. Tyre according to any one of Claims 1 to 14, in which the thermoplastic polymer film is provided with an adhesive layer facing each layer of rubber composition.
